# EUROPÄISCHE PATENTSCHRIFT

(11) **EP 2 695 546 B1**
(45) Veröffentlichungstag und Bekanntmachung des Hinweises auf die Patenterteilung: **16.09.2015**
(21) Anmeldenummer: 13177066.1
(22) Anmeldetag: 18.07.2013
(51) Int. Cl.: A47C 20/04

(54) **Antriebssystem mit einem Linearaktuator sowie Möbelstück mit einem solchen Antriebssystem**
Drive system with a linear actuator and furniture item with such a drive system
Système d'entraînement doté d'un actionneur linéaire et pièce de meuble dotée d'un tel système d'entraînement

(30) Priorität: 06.08.2012 DE 202012102949 U
(43) Veröffentlichungstag der Anmeldung: 12.02.2014
(73) Patentinhaber: CIAR S.P.A., 61100 Pesaro (IT)
(72) Erfinder: Marcantoni, Egidio, 61122 Pesaro (PU) (IT)
(74) Vertreter: Tetzner, Michael

(56) Entgegenhaltungen:
- EP-A1- 2 163 172
- WO-A1-2007/093181
- DE-A1- 1 404 673
- GB-A- 2 017 810

## Beschreibung

Die Erfindung betrifft ein Antriebssystem mit einem Linearaktuator zur Übertragung einer Linearbewegung und einem Rahmen zur Befestigung des Linearaktuators, wobei der Linearaktuator eine Spindel und eine mit dieser zusammenwirkende Mutter sowie einen Elektromotor zum Antreiben der Spindel aufweist. Die Erfindung betrifft weiterhin ein Möbelstück mit einem derartigen Antriebssystem, wobei es sich hierbei beispielsweise um ein Sitz- oder Liegemöbelstück handeln kann.

Aus der EP 1 384 422 B1 ist ein Sitzmöbel mit einem Sitz und einer Rückenlehne bekannt, die gelenkig an einem Rahmen gehaltert sind, wobei ein als Linearaktuator ausgebildeter Bestätigungsmechanismus zum Verstellen der Neigung von Sitz und Rückenlehne vorgesehen ist. Der Linearaktuator wird üblicherweise an einem Rahmen des Möbelstücks verschraubt. Der Montagebereich ist dabei oft nur schwer zugänglich, sodass die Montage des Linearaktuators einen nicht unerheblichen Aufwand darstellt. Auch ein ggf. erforderlicher Austausch eines defekten Linearaktuators zu einem späteren Zeitpunkt gestaltet sich meist schwierig.

Die DE 14 04 673 A1 offenbart ein mittels Linearaktuator verstellbares Bett gemäß dem Oberbegriff des Anspruches 1.

Der Erfindung liegt daher die Aufgabe zugrunde, die Montage des Linearaktuators zu vereinfachen.

Erfindungsgemäß wird diese Aufgabe durch die Merkmale des Anspruches 1 gelöst. Das erfindungsgemäße Antriebssystem besteht im Wesentlichen aus
- einem Linearaktuator zur Übertragung einer Linearbewegung, der eine Spindel und eine mit dieser zusammenwirkende Mutter sowie einen Elektromotor zum Antreiben der Spindel aufweist, und
- einem feststehenden Rahmen und wenigstens einem relativ hierzu beweglichen Rahmen,
- wobei der Linearaktuator am feststehenden Rahmen befestigt ist und der bewegliche Rahmen über wenigstens ein Betätigungsgestänge gelenkig mit der Mutter gekoppelt ist, wobei eine Verschiebung der Mutter längs der Spindel eine Bewegung des beweglichen Rahmens relativ zum feststehenden Rahmen bewirkt,

Die Mutter weist weiterhin wenigstens einen Zapfen auf und das Betätigungsgestänge ist mit einer korrespondierenden Aussparung zum Aufstecken des Betätigungsgestänges auf den Zapfen ausgestattet, wobei das aufgesteckte Betätigungsgestänge mit einem Sicherungselement, insbesondere einem Klipp, am Zapfen gesichert ist. Natürlich ist auch die kinematische Umkehr (Zapfen am Betätigungsgestänge und korrespondierenden Aussparung an der Mutter) denkbar.

Das Betätigungsgestänge kann somit auf einfache Art und Weise mit der Mutter gekoppelt werden und vereinfacht die Montage dadurch erheblich.

Weiterhin sind an einem ersten Ende des Linearaktuators erste Befestigungsmittel vorgesehen, die mit zweiten Befestigungsmitteln am feststehenden Rahmen zusammenwirken und an einem zweiten Ende des Linearaktuators sind dritte Befestigungsmittel vorgesehen, die mit vierten Befestigungsmittel am feststehenden Rahmen zusammenwirken. Die ersten und zweiten Befestigungsmittel sowie die dritten und vierten Befestigungsmittel sind durch eine Verschiebung des Linearaktuators relativ zum feststehenden Rahmen in Längsrichtung der Spindel zwischen einer Freigabestellung und einer Arretierstellung verschiebbar, wobei weiterhin ein lösbares Arretierelement vorgesehen ist, das in der Arretierstellung eine Relativbewegung des Linearaktuators relativ zum feststehenden Rahmen blockiert.

Der Linearaktuator muss daher nicht mehr umständlich mit einzelnen Schrauben am Rahmen befestigt werden, sondern kann vielmehr durch eine einfache Verschiebung in eine Arretierstellung verschoben werden, in welche der Linearaktuator nur noch gesichert werden muss. Auf diese Weise kann die Montage bzw. ein Austausch eines ggf. defekten Linearaktuators zusätzlich vereinfacht und beschleunigt werden.

Weitere Ausgestaltungen der Erfindung sind Gegenstand der Unteransprüche.

Die Mutter weist vorzugsweise auf zwei gegenüberliegenden Seiten jeweils einen Zapfen aufweist, die mit jeweils einem Betätigungsgestänge zusammenwirken. Hierdurch kann ein Verkanten der Mutter auf der Spindel durch eine einseitige Belastung vermieden werden. Gemäß einer weiteren Ausgestaltung ist die Mutter und der wenigstens eine Zapfen als Kunststoffspritzgussteil ausgebildet. Zur Aufnahme des Sicherungselements ist in einer Ausführung der Erfindung eine umlaufende Nut am Zapfen vorgesehen. Die Nut ist dabei so angeordnet und ausgebildet, dass sie das Sicherungselement, insbesondere einen Klipp, aufnimmt und ein Abziehen des aufgesteckten Betätigungsgestänges verhindert.

In einer Ausgestaltung der Erfindung ist das erste Ende des Linearaktuators mit einer Abschlusskappe abgeschlossen, wobei die ersten Befestigungsmittel an dieser Abschlusskappe angeordnet sind. Weiterhin kann der Elektromotor am zweiten Ende des Linearaktuators vorgesehen sein und ein Gehäuse aufweisen, wobei die dritten Befestigungsmittel am Gehäuse des Elektromotors angeordnet sind.

Gemäß einer ersten Ausgestaltung der Erfindung sind die ersten und zweiten Befestigungsmittel nach Art einer Schlüsselloch-Verbindung ausgebildet, wobei das erste oder zweite Befestigungsmittel wenigstens eine Schlüssellochaussparung aufweist und das andere Befestigungsmittel wenigstens einen mit der Schlüssellochaussparung zusammenwirkenden Zapfen vorsieht.

Gemäß einer zweiten Ausgestaltung der Erfindung bilden das erste und zweite Befestigungsmittel eine Art Haken- und Ösen-Verbindung. Hierbei kann das erste oder zweite Befestigungsmittel durch wenigstens einen Haken und das andere Befestigungsmittel durch eine mit dem Haken zusammenwirkende Öse gebildet werden.

Das Arretierelement kann beispielsweise durch einen Bolzen oder Stift gebildet werden, der mit entsprechenden, in der Arretierstellung fluchtenden Bohrungen im dritten und vierten Befestigungsmittel zusammenwirkt. Das Arretierelement kann dabei auch durch ein Sicherungselement, insbesondere einen Klipp, gesichert werden.

Gemäß einer bevorzugten Ausgestaltung der Erfindung ist zumindest das erste und zweite und/oder das dritte und vierte Betätigungselement zur werkzeuglosen Befestigung des Linearaktuators am feststehenden Rahmen ausgebildet.

Weitere Vorteile und Ausgestaltungen der Erfindung werden im Folgenden anhand der Beschreibung zweier Ausführungsbeispiele und der Zeichnung näher erläutert.

In der Zeichnung zeigen
- Fig. 1: eine dreidimensionale Explosionsdarstellung des Antriebssystems gemäß einem ersten Ausführungsbeispiel,
- Fig. 2: eine dreidimensionale Darstellung des ersten Ausführungsbeispiels mit angekoppeltem Betätigungsgestänge,
- Fig. 3: eine dreidimensionale Darstellung des ersten Ausführungsbeispiels, wobei sich der Linearaktuator in der Freigabestellung am Rahmen befindet,
- Fig. 4: eine dreidimensionale Darstellung des ersten Ausführungsbeispiels, wobei sich der Linearaktuator in der Arretierstellung am Rahmen befindet,
- Fig. 5: eine Seitenansicht der Mutter,
- Fig. 6: eine Schnittdarstellung der Mutter mit aufgestecktem Betätigungsgestänge längs der Linie A-A der Fig. 5,
- Fig. 7: eine dreidimensionale Explosionsdarstellung des Antriebssystems gemäß einem zweiten Ausführungsbeispiel und
- Fig. 8: eine dreidimensionale Darstellung des zweiten Ausführungsbeispiels, wobei sich der Linearaktuator in der Arretierstellung am Rahmen befindet.

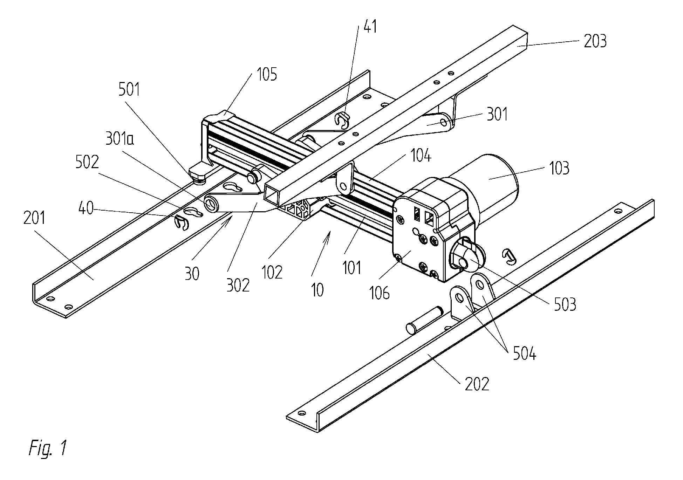

Das in Fig. 1 dargestellte Antriebssystem besteht im Wesentlichen aus einem Linearaktuator 10 zur Übertragung einer Linearbewegung und einem feststehenden Rahmen (feststehende Rahmenteile 201, 202), an dem der Linearaktuator befestigt ist und einem beweglichen Rahmen 203, der beispielsweise gelenkig an den feststehenden Rahmen gehaltert ist und mit dem Linearaktuator gekoppelt ist.Der Linearaktuator 10 weist eine Spindel 101, eine mit dieser zusammenwirkende Mutter 102 sowie einen Elektromotor 103 zum Antreiben der Spindel auf. Die Mutter 102 ist längs der Spindel 101 in einer Führungsschiene 104 geführt, die an ihrem einen Ende mit einer Verschlusskappe 105 abgeschlossen ist. Am anderen Ende ist der Elektromotor vorgesehen, der zusammen mit einem Getriebe zur Übertragung der Motordrehbewegung auf die Spindel in einem Gehäuse 106 untergebracht ist.

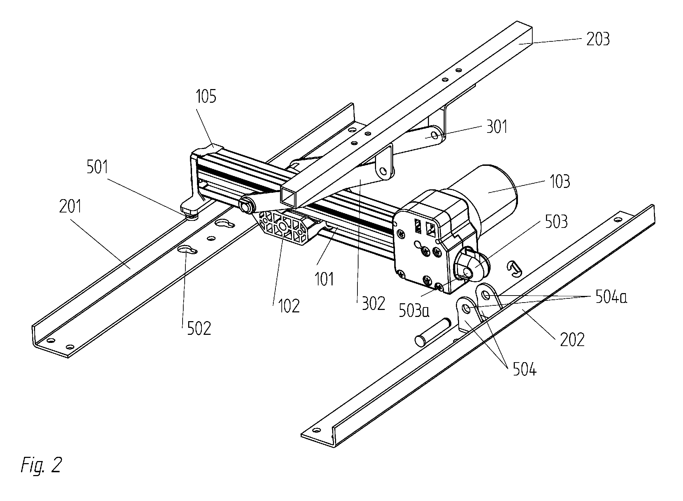

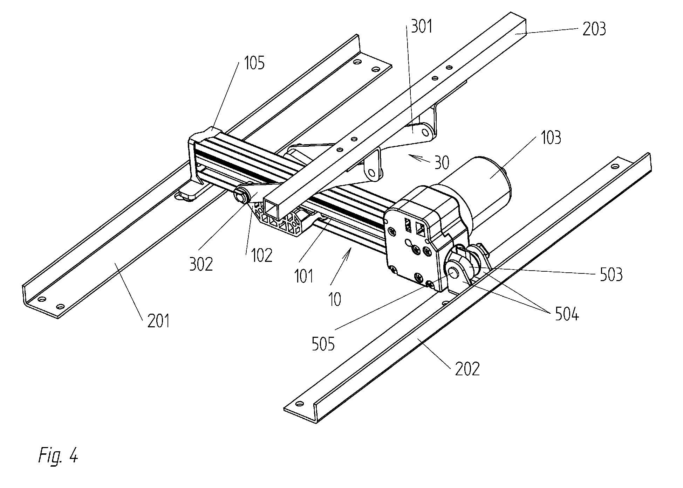

Im eingebauten Zustand gemäß der Fig. 4 ist der Linearaktuator 10 zwischen den beiden feststehenden Rahmenteilen 201 und 202 fixiert und über ein Betätigungsgestänge 30 mit dem beweglichen Rahmenteil 203 verbunden. Das Betätigungsgestänge 30 wird im dargestellten Ausführungsbeispiel durch zwei parallele Gelenkstangen 301, 302 gebildet, die mit einem Ende gelenkig am beweglichen Rahmenteil 203 und mit dem anderen Ende gelenkig an der Mutter 102 angekoppelt sind (siehe Fig. 2).

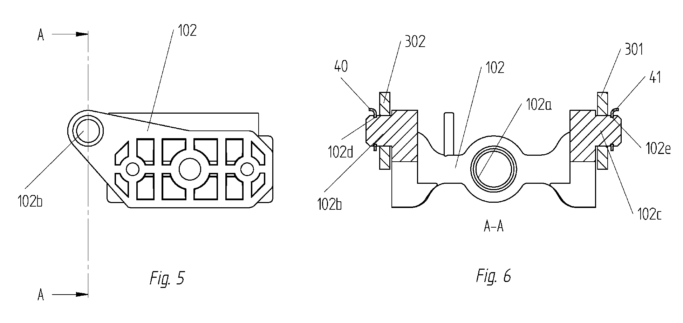

Die Mutter 102 ist in den Figuren 5 und 6 näher dargestellt. Sie weist eine Gewindebohrung 102a zur Aufnahme der Spindel 101 und auf gegenüberliegenden Seiten jeweils einen Zapfen 102b, 102c auf. Die Mutter 102 und die Zapfen 102b, 102c sind vorzugsweise einstückig als Kunststoffspritzgussteil ausgebildet. Die Gelenkstangen 301, 302 des Betätigungsgestänges sind mit korrespondierenden Aussparung 301a und 302a zum Aufstecken des Betätigungsgestänges auf die Zapfen 102b, 102c ausgestattet, wobei die aufgesteckten Gelenkstangen 301, 302 mit jeweils einem Sicherungselement 40, 41, insbesondere einem Klipp, am Zapfen gesichert sind. Hierzu weisen die Zapfen umlaufende Nuten 102d, 102e zur Aufnahme der Sicherungselemente 40, 41 auf. Die Gelenkstangen 301, 302 sind auf diese Weise gelenkig an den Zapfen gehaltert.

Der bewegliche Rahmen 203 ist in hier nicht näher dargstellte Art und Weise gelenkig mit den feststehenden Rahmenteilen 201 und 202 verbunden, sodass eine Bewegung der Mutter 102 längs der Spindel 101 über das Betätigungsgestänge 30 eine Relativbewegung des beweglichen Rahmens 203 gegenüber den feststehenden Rahmenteilen 201 und 202 bewirkt.

Die Befestigung des Linearaktuartors 10 an den beiden feststehenden Rahmenteilen 201 und 202, erfolgt über erste bis vierte Befestigungsmittel 501 bis 504. Hierzu sind im Bereich der Abschlusskappe 5 erste Befestigungsmittel 501 vorgesehen, die mit zweiten Befestigungsmittel 502 am feststehenden Rahmenteil 201 zusammenwirken. Das dritte Befestigungsmittel 503 wird durch einen Vorsprung des Gehäuses 106 gebildet, der mit vierten Befestigungsmitteln zusammenwirkt, die durch zwei Laschen gebildet werden und den Vorsprung zwischen sich aufnehmen. Sowohl die dritten Befestigungsmittel 503 als auch die vierten Befestigungsmitteln 504 weisen Bohrungen 503a, 504a auf, die in der Arretierstellung gemäß Fig. 4 miteinander fluchten, sodass ein Arretierelement 505, beispielsweise ein Bolzen oder ein Stift eingesteckt werden kann.

Das erste und zweite Befestigungsmittel 501, 502 sind nach Art einer Schlüsselloch-Verbindung ausgebildet, wobei das zweite Befestigungsmittel 502 beispielsweise durch eine Schlüssellochaussparung und das erste Befestigungsmittel durch einen hiermit zusammenwirkenden Zapfen gebildet wird.

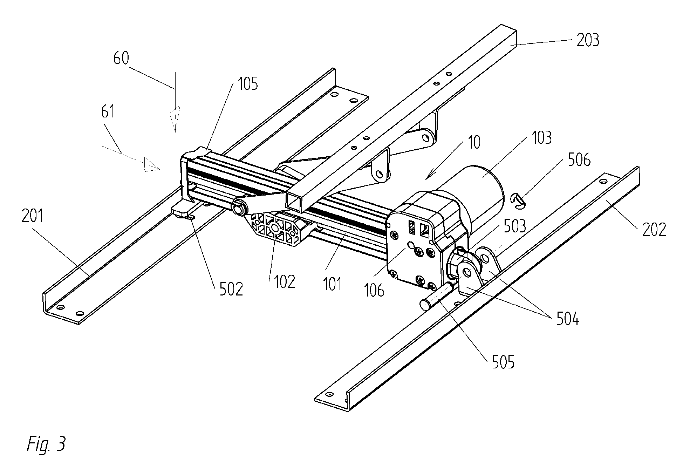

Zur Befestigung des Linearaktuators 10 am feststehenden Rahmen wird der Linearaktuator zunächst mit seinem ersten Befestigungsmittel 501 von oben (Pfeil 60) in das zweite Befestigungsmittel 502 am feststehenden Rahmenteil 201 eingesetzt, wobei gleichzeitig das als Vorsprung ausgebildete dritte Befestigungsmittel 503 zwischen die Laschen des vierten Befestigungsmittels 504 kommt (siehe Fig. 3). Anschließend erfolgt eine Verschiebung des Linearaktuators 10 relativ zum feststehenden Rahmen in Richtung des Pfeils 61. Hierbei kommt das als Zapfen ausgebildete erste Befestigungsmittel in dem verengten Bereich des als Schlüssellochaussparung ausgebildeten zweiten Befestigungselements, wobei der Zapfen des ersten Befestigungsmittels 501 eine Nut aufweist, die in dieser Stellung der beiden Befestigungsmittel eine Bewegung des Linearaktuators entgegen dem Pfeil 60 verhindert. Gleichzeitig kommen die Bohrungen der dritten und vierten Befestigungsmittel 503, 504 in eine fluchtende Ausrichtung, sodass das Arretierelement 505 eingesteckt und durch ein Sicherungselement 506, insbesondere einen Klipp, gesichert werden kann.

Die ersten und zweiten Befestigungsmittel 501, 502 sowie die dritten und vierten Befestigungsmittel 503, 504 sind somit durch eine Verschiebung des Linearaktuators 10 relativ zum feststehenden Rahmen in Längsrichtung der Spindel 101 zwischen der in Fig. 3 gezeigten Freigabestellung und der in Fig. 4 gezeigten Arretierstellung verschiebbar. Das lösbare Arretierelement 505 blockiert in der Arretierstellung gemäß Fig. 4 eine Relativverschiebung des Linearaktuartors 10 relativ zum feststehenden Rahmen. Die oben beschriebenen Befestigungsmittel 501 bis 504 ermöglichen eine werkzeuglose Befestigung des Linearaktuators 10 am feststehenden Rahmen. Hierdurch wird die Montage und ein ggf. erforderlicher Austausch des Linearaktuators erheblich vereinfacht.

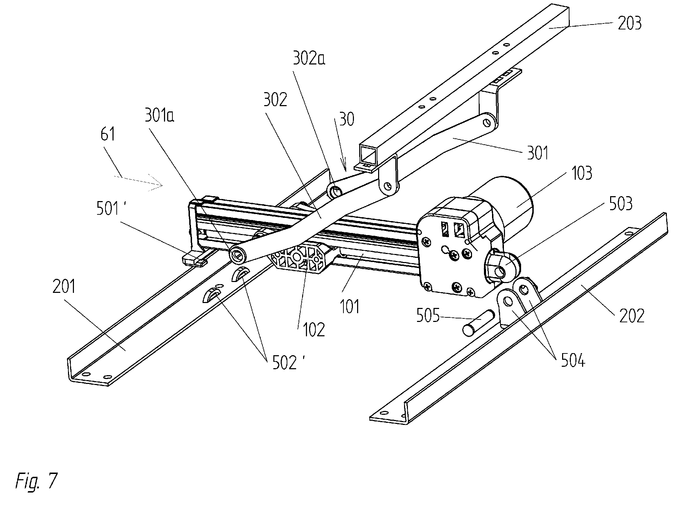

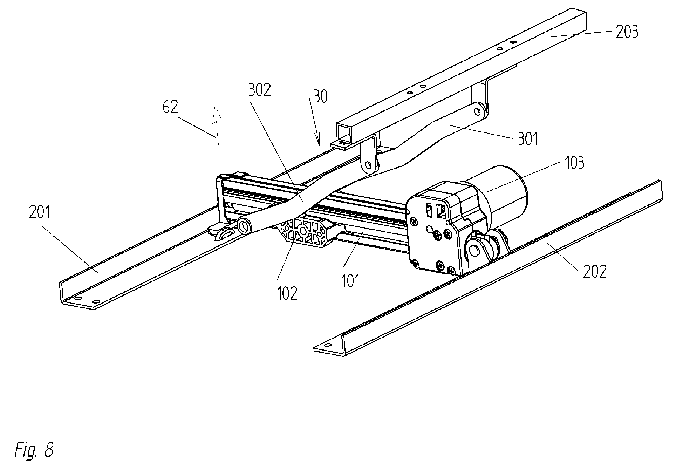

In den Figuren 7 und 8 ist ein zweites Ausführungsbeispiel der Erfindung dargestellt, dass sich jedoch nur durch die Ausbildung der ersten und zweiten Befestigungsmittel 501', 502' unterscheidet. Bei diesem Ausführungsbeispiel ist die Verbindung nicht nach Art einer Schlüsselloch-Verbindung, sondern nach Art einer Haken-und-Ösen-Verbindung ausgebildet. Dazu ist das erste Befestigungsmittel 501' beispielsweise als Haken und das zweite Befestigungsmittel 502' als Öse ausgebildet, wobei sich der Haken bei einer Verschiebung des Linearaktuators in Richtung des Pfeils 61 in die Öse schiebt und sich dadurch der Linearaktuator nicht mehr in Richtung des Pfeiles 62 (Fig. 8) bewegen kann. Die dritten und vierten Befestigungsmittel 503, 504 stimmen mit den entsprechenden Befestigungsmitteln aus dem ersten Ausführungsbeispiel überein. Auch die Anbindung des Betätigungsgestänges 30 an die Mutter 102 erfolgt in übereinstimmender Weise.

Das obige Antriebssystem kann insbesondere für ein Möbelstück, beispielsweise für ein Sitz- oder Liegemöbelstück, vorgesehen werden, das mit wenigstens einem beweglichen Element (beispielsweise einer Rückenlehne eines Sitzes oder einem Kopf- oder Fußteil eines Liegemöbels) ausgestattet ist. Das bewegliche Element ist dann am beweglichen Rahmen 203 angebracht, während der Linearmotor am feststehenden Rahmen des Möbelstücks vorgesehen ist.

## Patentansprüche

1. Antriebssystem mit
- einem Linearaktuator (10) zur Übertragung einer Linearbewegung, der eine Spindel (101) und eine mit dieser zusammenwirkende Mutter (102) sowie einen Elektromotor (103) zum Antreiben der Spindel (101) aufweist, und
- einem feststehenden Rahmen (201, 202) und wenigstens einen relativ hierzu beweglichen Rahmen (203),
- wobei der Linearaktuator am feststehenden Rahmen (201, 202) befestigt ist und der bewegliche Rahmen (203) über wenigstens ein Betätigungsgestänge (30) gelenkig mit der Mutter (102) gekoppelt ist, wobei eine Verschiebung der Mutter (102) längs der Spindel (101) eine Bewegung des beweglichen Rahmens (203) relativ zum feststehenden Rahmen (201, 202) bewirkt,
wobei die Mutter wenigstens einen Zapfen (102b) aufweist und das Betätigungsgestänge mit einer korrespondierenden Aussparung (301a) zum Aufstecken des Betätigungsgestänges auf den Zapfen ausgestattet ist oder umgekehrt, wobei das aufgesteckte Betätigungsgestänge mit einem Sicherungselement (40), insbesondere einem Klipp, am Zapfen gesichert ist,
**dadurch gekennzeichnet, dass** zur Befestigung des Linearaktuators am feststehenden Rahmen an einem ersten Ende des Linearaktuators (10) erste Befestigungsmittel (501, 501') vorgesehen sind, die mit zweiten Befestigungsmitteln (502, 502') am feststehenden Rahmen zusammenwirken und an einem zweiten Ende des Linearaktuators (10) dritte Befestigungsmittel (503) vorgesehen sind, die mit vierten Befestigungsmitteln (504) am feststehenden Rahmen (20) zusammenwirken,
wobei die ersten und zweiten Befestigungsmittel (501, 502; 501', 502') sowie die dritten und vierten Befestigungsmittel (503, 504) durch eine Verschiebung des Linearaktuators (10) relativ zum feststehenden Rahmen (20) in Längsrichtung der Spindel (101) zwischen einer Freigabestellung und einer Arretierstellung verschiebbar sind und ein lösbares Arretierelement (505) vorgesehen ist, das in der Arretierstellung eine Relativverschiebung des Linearaktuators (10) relativ zum feststehenden Rahmen (20) blockiert.

2. Antriebssystem nach Anspruch 1, **dadurch gekennzeichnet, dass** die Mutter auf zwei gegenüberliegenden Seiten jeweils einen Zapfen aufweist, die mit jeweils einem Betätigungsgestänge zusammenwirken.

3. Antriebssystem nach Anspruch 1, **dadurch gekennzeichnet, dass** die Mutter und der wenigstens eine Zapfen als Kunststoffspritzgussteil ausgebildet ist.

4. Antriebssystem nach Anspruch 1, **dadurch gekennzeichnet, dass** der wenigstens eine Zapfen mit einer umlaufenden Nut zur Aufnahme des Sicherungselements versehen ist.

5. Antriebssystem nach Anspruch 1, **dadurch gekennzeichnet, dass** das erste Ende des Linearaktuators (10) mit einer Abschlusskappe (105) abgeschlossen ist und die ersten Befestigungsmittel (501, 502; 501', 502') an dieser Abschlusskappe (105) angeordnet sind.

6. Antriebssystem nach Anspruch 1, **dadurch gekennzeichnet, dass** der Elektromotor (103) ein Gehäuse (106) aufweist und am zweiten Ende des Linearaktuators (10) vorgesehen ist, wobei die dritten Befestigungsmittel (503) am Gehäuse (106) angeordnet sind.

7. Antriebssystem nach einem oder mehreren der vorhergehenden Ansprüche, **dadurch gekennzeichnet, dass** das erste und zweite Befestigungsmittel (501', 502') nach Art einer Haken- und Ösen-Verbindung ausgebildet sind.

8. Antriebssystem nach Anspruch 1, **dadurch gekennzeichnet, dass** das erste oder zweite Befestigungsmittel (501', 502') durch wenigstens einen Haken und das andere Befestigungsmittel durch eine mit dem Haken zusammenwirkende Öse gebildet wird.

9. Antriebssystem nach einem der Ansprüche 1 bis 4, **dadurch gekennzeichnet, dass** das erste und zweite Befestigungsmittel (501, 502) nach Art einer Schlüsselloch-Verbindung ausgebildet sind.

10. Antriebssystem nach Anspruch 6, **dadurch gekennzeichnet, dass** das erste oder zweite Befestigungsmittel (501, 502) wenigstens eine Schlüssellochaussparung aufweist und das andere Befestigungsmittel wenigstens einen mit der Schlüssellochaussparung zusammenwirkenden Zapfen vorsieht.

11. Antriebssystem nach einem oder mehreren der vorhergehenden Ansprüche, **dadurch gekennzeichnet, dass** das Arretierelement (505) durch einen Bolzen oder Stift gebildet wird, der mit entsprechenden, in der Arretierstellung fluchtenden Bohrungen (503a, 504a) im dritten und vierten Befestigungsmittel (503, 504) zusammenwirkt.

12. Antriebssystem nach einem oder mehreren der vorhergehenden Ansprüche, **dadurch gekennzeichnet, dass** das Arretierelement (505) durch ein Sicherungselement (506), insbesondere einen Klipp, gesichert wird.

13. Antriebssystem nach einem oder mehreren der vorhergehenden Ansprüche, **dadurch gekennzeichnet, dass** zumindest das erste (501; 501') und zweite (502; 502') und/oder das dritte (503) und vierte (504) Betätigungselement zur werkzeuglosen Befestigung des Linearaktuators (10) am feststehenden Rahmen (20) ausgebildet ist.

14. Antriebssystem nach Anspruch 1, **dadurch gekennzeichnet, dass** das Betätigungsgestänge (30) werkzeuglos mit der Mutter (102) koppelbar ist.

15. Möbelstück mit wenigstens einem beweglichen Element und einem Antriebssystem nach einem oder mehreren der vorhergehenden Ansprüche, wobei das bewegliche Element den beweglichen Rahmen umfasst.

## Claims

1. Drive system having
- a linear actuator (10) for transmitting a linear movement which has a spindle (101) and a nut (102) which co-operates therewith and an electric motor (103) for driving the spindle (101), and
- a fixed frame (201, 202) and at least one frame (203) which can be moved relative thereto,
- the linear actuator being secured to the fixed frame (201, 202) and the movable frame (203) being coupled to the nut (102) in an articulated manner by means of at least one actuation rod (30), a movement of the nut (102) along the spindle (101) bringing about a movement of the movable frame (203) relative to the fixed frame (201, 202),
wherein the nut has at least one stud and the actuation rod is provided with a corresponding recess for fitting the actuation rod onto the stud, or the other way round, and wherein the fitted actuation rod being secured to the stud by means of a securing element, in particular a clip,
**characterised in that**, in order to secure the linear actuator to the fixed frame, there are provided at a first end of the linear actuator (10) first securing means (501, 501') which co-operate with second securing means (502, 502') on the fixed frame and there are provided at a second end of the linear actuator (10) third securing means (503) which co-operate with fourth securing means (504) on the fixed frame (20),
wherein the first and second securing means (501, 502; 501', 502') and the third and fourth securing means (503, 504) can be moved by means of a displacement of the linear actuator (10) relative to the fixed frame (20) in the longitudinal direction of the spindle (101) between a release position and a locking position and there is provided a releasable locking element (505) which blocks a relative movement of the linear actuator (10) relative to the fixed frame (20) in the locking position.

2. Drive system according to claim 1, **characterised in that** the nut has, at two opposing sides, a stud, each of which co-operates with an actuation rod.

3. Drive system according to claim 1, **characterised in that** nut and the at least one stud are constructed as a plastics injection-moulded component.

4. Drive system according to claim 1, **characterised in that** the at least one stud is provided with a peripheral groove for receiving the securing element.

5. Drive system according to claim 1, **characterised in that** the first end of the linear actuator (10) is closed with a closure cap (105) and the first securing means (501, 502; 501', 502') are arranged on this closure cap (105).

6. Drive system according to claim 1, **characterised in that** the electric motor (103) has a housing (106) and is provided at the second end of the linear actuator (10), the third securing means (503) being arranged on the housing (106).

7. Drive system according to one or more of the preceding claims, **characterised in that** the first and second securing means (501', 502') are constructed in the form of a hook and eye connection.

8. Drive system according to claim 5, **characterised in that** the first or second securing means (501', 502') is formed by at least one hook and the other securing means is formed by an eye which co-operates with the hook.

9. Drive system according to any one of claims 1 to 4, **characterised in that** the first and second securing means (501, 502) are constructed in the form of a keyhole connection.

10. Drive system according to claim 6, **characterised in that** the first or second securing means (501, 502) has at least one keyhole recess and the other securing means provides for at least one stud which co-operates with the keyhole recess.

11. Drive system according to one or more of the preceding claims, **characterised in that** the locking element (505) is formed by a bolt or pin which co-operates with corresponding holes (503a, 504a) which are in alignment in the locking position in the third and fourth securing means (503, 504).

12. Drive system according to one or more of the preceding claims, **characterised in that** the locking element (505) is secured by a securing element (506), in particular a clip.

13. Drive system according to one or more of the preceding claims, **characterised in that** at least the first (501; 501') and second (502, 502') and/or the third (503) and fourth (504) actuation element is constructed to secure the linear actuator (10) to the fixed frame (20) in a tool-free manner.

14. Drive system according to claim 1, **characterised in that** the actuation rod (30) can be coupled to the nut (102) in a tool-free manner.

15. Item of furniture having at least one movable element and a drive system according to one or more of the preceding claims, the movable element comprising the movable frame.

## Revendications

1. Système d'entraînement comprenant
- un actionneur linéaire (10) servant à la transmission d'un mouvement linéaire, actionneur linéaire qui présente une broche (101) et un écrou (102) agissant de façon conjointe avec ladite broche, ainsi qu'un moteur électrique (103) servant à l'entraînement de la broche (101), et
- un cadre fixe (201, 202) et au moins un cadre mobile (203) par rapport audit cadre fixe,
où l'actionneur linéaire est fixé sur le cadre fixe (201, 202), et le cadre mobile (203) est accouplé de façon articulée à l'écrou (102), par au moins une tringlerie d'actionnement (30), où un déplacement de l'écrou (102) le long de la broche (101) provoque un mouvement du cadre mobile (203) par rapport au cadre fixe (201, 202),
où l'écrou présente au moins un tenon (102b), et la tringlerie d'actionnement est dotée d'un creux correspondant (301a) servant à emboîter la tringlerie d'actionnement sur le tenon ou inversement, où la tringlerie d'actionnement emboîtée est bloquée sur le tenon par un élément de blocage (40), en particulier un clip,
**caractérisé en ce que** pour la fixation de l'actionneur linéaire sur le cadre fixe, il est prévu, sur une première extrémité de 1'actionneur linéaire (10), des premiers moyens de fixation (501, 501') qui agissent de façon conjointe, sur le cadre fixe, avec des deuxièmes moyens de fixation (502, 502'), et il est prévu, au niveau d'une seconde extrémité de 1'actionneur linéaire (10), des troisièmes moyens de fixation (503) qui agissent de façon conjointe, sur le cadre fixe (20), avec des quatrièmes moyens de fixation (504),
où les premiers et les deuxièmes moyens de fixation (501, 502 ; 501', 502') ainsi que les troisièmes et les quatrièmes moyens de fixation (503, 504) sont déplaçables par un mouvement de l'actionneur linéaire (10), par rapport au cadre fixe (20), suivant la direction longitudinale de la broche (101), entre une position de libération et une position d'arrêt, et il est prévu un élément d'arrêt détachable (505) qui, dans la position d'arrêt, bloque un déplacement relatif de l'actionneur linéaire (10) par rapport au cadre fixe (20).

2. Système d'entraînement selon la revendication 1, **caractérisé en ce que** l'écrou présente à chaque fois, sur deux côtés opposés, un tenon qui agit à chaque fois, de façon conjointe, avec une tringlerie d'actionnement.

3. Système d'entraînement selon la revendication 1, **caractérisé en ce que** l'écrou et le tenon au moins au nombre de un sont configurés comme une pièce moulée par injection en matière plastique.

4. Système d'entraînement selon la revendication 1, **caractérisé en ce que** le tenon au moins au nombre de un est doté d'une rainure circulaire servant au logement de l'élément de blocage.

5. Système d'entraînement selon la revendication 1, **caractérisé en ce que** la première extrémité de l'actionneur linéaire (10) est fermée par un cache de fermeture (105), et les premiers moyens de fixation (501, 502 ; 501', 502') sont disposés sur ce cache de fermeture (105).

6. Système d'entraînement selon la revendication 1, **caractérisé en ce que** le moteur électrique (103) présente un boîtier (106) et est prévu au niveau de la seconde extrémité de l'actionneur linéaire (10), où les troisièmes moyens de fixation (503) sont disposés sur le boîtier (106).

7. Système d'entraînement selon l'une quelconque ou plusieurs des revendications précédentes, **caractérisé en ce que** le premier et le deuxième moyen de fixation (501', 502') sont configurés à la façon d'un assemblage par combinaison d'un crochet avec un sillet.

8. Système d'entraînement selon la revendication 1, **caractérisé en ce que** le premier ou le deuxième moyen de fixation (501', 502') est formé par au moins un crochet, et l'autre moyen de fixation est formé par un oeillet agissant de façon conjointe avec le crochet.

9. Système d'entraînement selon l'une quelconque des revendications 1 à 4, **caractérisé en ce que** le premier et le deuxième moyen de fixation (501, 502) sont conçus à la façon d'un assemblage de type trou de serrure.

10. Système d'entraînement selon la revendication 6, **caractérisé en ce que** le premier ou le deuxième moyen de fixation (501, 502) présente au moins un évidement de trou de serrure, et l'autre moyen de fixation prévoit au moins un tenon agissant de façon conjointe avec l'évidement du trou de serrure.

11. Système d'entraînement selon l'une quelconque ou plusieurs des revendications précédentes, **caractérisé en ce que** l'élément d'arrêt (505) est formé par un boulon ou une goupille qui agit de façon conjointe, dans le troisième et le quatrième moyen de fixation (503, 504), avec des perçages correspondants (503a, 504a) alignés dans la position d'arrêt.

12. Système d'entraînement selon l'une quelconque ou plusieurs des revendications précédentes, **caractérisé en ce que** l'élément d'arrêt (505) est fixé par un élément de blocage (506), en particulier un clip.

13. Système d'entraînement selon l'une quelconque ou plusieurs des revendications précédentes, **caractérisé en ce qu'**au moins le premier (501 ; 501') et le deuxième (502 ; 502') et/ou le troisième (503) et le quatrième (504) élément de fixation sont configurés pour la fixation - sans outil - de l'actionneur linéaire (10), sur le cadre fixe (20).

14. Système d'entraînement selon la revendication 1, **caractérisé en ce que** la tringlerie d'actionnement (30) peut être accouplée, sans outil, à l'écrou (102).

15. Meuble comprenant au moins un élément mobile et un système d'entraînement selon l'une quelconque ou plusieurs des revendications précédentes, où l'élément mobile comprend le cadre mobile.
